(19) Europäisches Patentamt
European Patent Office
Office européen des brevets

(11) Publication number: 0 486 104 A2

(12) # EUROPEAN PATENT APPLICATION

(21) Application number: 91202943.6

(22) Date of filing: 12.11.91

(51) Int. Cl.[5]: C08L 73/00, C08K 7/20, //(C08L73/00,25:18)

(30) Priority: 13.11.90 US 612058

(43) Date of publication of application: 20.05.92 Bulletin 92/21

(84) Designated Contracting States: BE DE FR GB IT NL

(71) Applicant: SHELL INTERNATIONALE RESEARCH MAATSCHAPPIJ B.V.
Carel van Bylandtlaan 30
NL-2596 HR Den Haag(NL)

(72) Inventor: Machado, Joseph Michael
2315 Wren Meadow Road
Richmond, Texas 77469(US)

(54) **Reinforced polyketon-polymer compositions.**

(57) Reinforced polymer composition with improved mechanical properties are produced from a blend of (1) a linear alternating polymer of carbon monoxide and at least one ethylenically unsaturated compound and (2) a polyvinylphenol, reinforced with (3) glass fibres not containing a chemical coupling agent.

EP 0 486 104 A2

This invention relates to a composition of a polyketone polymer reinforced with glass fibres.

The class of polymers of carbon monoxide and olefins has been known for some time. More recently, the class of linear alternating polymers of carbon monoxide and at least one ethylenically unsaturated compound, now becoming known as polyketones or polyketone polymers, has become of greater interest because of improved processes for their preparation.

The resulting polymers are relatively high molecular weight materials having established utility as premium thermoplastics in the production of shaped articles, such as containers for food and drink and parts for the automotive industry, which are produced by processing the polyketone polymer according to well known methods.

For some particular applications it has been found to be desirable to have properties for a polymeric composition which are somewhat different from those of the polyketone polymers. It would be of advantage to retain the more desirable properties of the polyketone polymers and yet improve other properties. Reinforcing a polymer with a filler often provides a less expensive product, in addition to desirable properties, such as stiffness and strength, for various applications. A glass-filled polyketone composition is disclosed in Applicant's U.S. Patent No. 4,874,801.

However, for polyketone polymers, the presence of a coupling agent ("sizing") is usually required to provide optimal adhesion between the polymer and the glass filler through (chemical) bonding. The presence of the sizing on the glass fibres increases their cost, and may cause unwanted degradation of the polymer, through reaction therewith, or by acting as an initiator or as a catalyst for degradation reactions in the polymer.

The present invention aims to provide a composition of a linear alternating polymer of carbon monoxide and at least one ethylenically unsaturated hydrocarbon that is reinforced with unsized glass fibres. The reinforced blends should preferably demonstrate improved mechanical properties.

It has now been found that these objectives are met when the composition additionally contains a poly(vinylphenol) polymer. Accordingly, the present invention relates to a polyketone polymer composition comprising a linear alternating polymer of carbon monoxide and at least one ethylenically unsaturated compound, a glass fibre reinforcement, and a polyvinylphenol.

The glass fibres of the present composition are not necessarily (preferably not) coated with a chemical coupling agent. The polyvinylphenol of the reinforced blends is thought to act as a compatibilizing agent, and to improve adhesion by physically, rather than chemically, bonding the polyketone polymer to the glass fibres. The reinforced blends of the invention exhibit good adhesion, as indicated by tensile and flexural strength, without the use of a chemical coupling agent.

The glass reinforced polyketone/polyvinylphenol polymer blends are uniform blends having properties improved over the components or non-reinforced blends of the same components. The reinforced blends exhibit improved tensile strength without significant loss of other desirable properties in comparison to reinforced polyketone or non-reinforced blends. The reinforced blends are therefore particularly useful where moulded parts are desired which require strength despite exposure to elevated temperatures. Illustrative of such applications are the production of both external and internal parts for automotive applications and structural parts for application in the construction industry.

The polyketone polymers of the reinforced blends of the invention are of a linear alternating structure and contain substantially one molecule of carbon monoxide for each molecule of unsaturated compound. Suitable ethylenically unsaturated compounds for use as precursors of the polyketone polymers are hydrocarbons having up to 20 carbon atoms inclusive, preferably up to 10 carbon atoms, which are aliphatic such as ethene and other α-olefins including propene, 1-butene, isobutene, 1-hexene, 1-octene and 1-dodecene, or which are arylaliphatic containing an aryl substituent on an otherwise aliphatic molecule, particularly an aryl substituent on a carbon atom of the ethylenic unsaturation. Illustrative of this latter class of ethylenically unsaturated hydrocarbons are styrene, p-methylstyrene, p-ethylstyrene and m-isopropylstyrene. The preferred polyketone polymers are copolymers of carbon monoxide and ethene or terpolymers of carbon monoxide, ethene and a second ethylenically unsaturated hydrocarbon of at least 3 carbon atoms, particularly an α-olefin such as propene.

When the preferred polyketone terpolymers are employed as the major polymeric component of the blends of the invention, suitably there will be within the terpolymer at least 2 units incorporating a moiety of ethylene for each unit incorporating a moiety of the second hydrocarbon. Preferably, there will be from 10 units to 100 units incorporating a moiety of the second hydrocarbon. The polymer chain of the preferred polyketone polymers is therefore represented by the repeating formula

$$-[-CO-(-CH_2-CH_2-)-]_x-[-CO-(-G-)-]_y-$$

wherein G is the moiety of ethylenically unsaturated hydrocarbon of at least 3 carbon atoms polymerized through the ethylenic unsaturation and the ratio of y:x is no more than 0.5. When copolymers of carbon monoxide and ethene are employed in the blends of the invention, there will be no second hydrocarbon present and the copolymers are represented by the above formula wherein y is zero. When y is other than zero, i.e., terpolymers are employed, the $-CO\{CH_2CH_2\}$ units and the $-CO\{G\}$ units are found randomly throughout the polymer chain, and preferred ratios of y:x are from 0.01 to 0.1. The end groups or "caps" of the polymer chain will depend upon what materials were present during the production of the polymer and whether or how the polymer was purified. The precise nature of the end groups does not appear to influence the properties of the polymer to any considerable extent so that the polymers are fairly represented by the formula for the polymer chain as depicted above.

Of particular interest are the polyketone polymers of number average molecular weight from 1000 to 200,000, particularly those of number average molecular weight from 20,000 to 90,000 as determined by gel permeation chromatography. The physical properties of the polymer will depend in part upon the molecular weight, whether the polymer is a copolymer or a terpolymer and, in the case of terpolymers, the nature of the proportion of the second hydrocarbon present. Typical melting points for the polymers are from 175 °C to 300 °C, more typically from 210 °C to 270 °C. The polymers have a limiting viscosity number (LVN), measured in m-cresol at 60 °C in a standard capillary viscosity measuring device, from 0.5 dl/g to 10 dl/g, more frequently from 0.8 dl/g to 4 dl/g.

A preferred method for the production of the polyketone polymers is illustrated by U.S. 4,843,144. The carbon monoxide and hydrocarbon monomer(s) are contacted under polymerization conditions in the presence of a catalyst composition formed from a compound of palladium, the anion of a non-hydrohalogenic acid having a pKa (measured in water at 18 °C) of below 6, preferably below 2, and a bidentate ligand of phosphorus.

The polyvinylphenols which are employed as the second polymeric component in the reinforced blends of the invention are homopolymers and copolymers of ortho-, meta- and para-vinylphenols. The vinylphenols polymerized may be non-substituted or may carry any of various substituents that do not markedly affect the phase behaviour of the polymer blend. Non-substituted polyvinylphenols are preferred.

The molecular weight of the polyvinylphenol polymer does not appear to be a critical factor. Those having a number average molecular weight of between 2,000 and 75,000 are preferred, but the polymers having molecular weights lower or higher than this range may also be used.

The polyvinylphenol may be prepared by bulk polymerization, emulsion polymerization or solution polymerization of the corresponding monomers in the presence of a cationic catalyst such as boron trifluoride etherate. Such procedures are well known in the art.

High purity para-vinylphenol polymers may be prepared by several methods known in the art. A high purity para-vinylphenol polymer may be produced by polymerizing para-vinylphenol in the presence of phenols without unsaturated side chains, and in the presence of a polymerization accelerator. High purity para-vinylphenol polymer may also be produced by dehydrogenating crude para-ethylphenol, polymerizing the resulting crude para-vinylphenol without purification, and then purifying the resulting polymerization product. A high purity para-vinylphenol polymer is commercially produced by polymerization of a high purity para-acetoxystyrene monomer, followed by hydrolysis to para-vinylphenol polymer.

The precise percentage of the polyvinylphenol to be employed in the reinforced blends of the invention will depend upon the anticipated end use for the blend. Compositions containing from 0.1 wt% up to 10 wt%, based on total composition, of the polyvinylphenol are satisfactory, with 0.5 to 5 wt% being preferred.

The blends of the invention are reinforced by the presence of glass fibre. The term "glass" is employed in the conventional meaning to indicate that class of complex metal silicates which are commonly referred to as glasses. Although the addition of rare earth metal oxides or transition metal oxides to other metal silicates on occasion will produce a glass of rather exotic properties, the glass from which the glass fibre of the invention is produced is the more common alkali metal silicate glass, particularly a borosilicate glass. Fibres produced of such glass are conventional and are commercially available and used as reinforcements for polymeric products.

In the glass reinforced blends of the invention, the glass fibres which contribute the most desirable properties to the reinforced blend are chopped glass fibres of circular cross-section. The fibres may range in diameter from 5 - 20 μ preferably from 10 - 18 μ. Fibres of greater or lesser diameter are satisfactory but fibres of too small a diameter do not provide the desired strength and fibres of too large a diameter contribute too much weight for the resulting strength and may not be economical. Although in some applications long continuous fibres of glass are satisfactory, it is preferred in the reinforced blends of the invention to use short fibres of glass. Lengths of glass fibre from 2.5 mm. to 13 mm. are suitable. While

somewhat longer or somewhat shorter lengths are also useful, too long a glass fibre detracts from the processability of the blend-glass mixture while too short a fibre does not provide the desired strength to the blend.

The glass fibres used as reinforcements for polymer materials are customarily provided by the manufacturer with a coating of a sizing material or a coupling agent, which chemically bonds the polymer to the glass fibres. The nature of the sizing or coupling agent will influence the degree to which the polymer and glass fibre will adhere. In the present invention such sizings are superfluous, though not excluded.

The glass fibres are suitably employed in a quantity from 10 wt% to 45 wt% based on total composition, and preferably in a quantity of from 25 wt% to 40 wt% on the same basis.

The method of producing the reinforced blends of the invention is not critical so long as an intimate mixture of the three components is produced without undue degradation of the components or the resulting reinforced blend. The polyvinylphenol may simply be combined with the polyketone polymer in a compounding process. In one modification the components are dry mixed and converted to a reinforced blend by application of elevated temperature and pressure. In an alternative modification, the components are passed through an extruder to produce the reinforced blend as an extrudate. The components are also usefully blended in a mixer which operates at elevated temperature and at high shear.

The reinforced blends of the invention may also include additives such as antioxidants and stabilizers, other fillers and reinforcements, mould release agents, fire retarding chemicals, colorants, and other materials which are designed to improve the processability of the polymer or the properties of the resulting blend. Such additives are added together with, prior to or subsequent to the blending of the polymeric and glass fibre components.

The invention is further illustrated by the following Example.

## Example

A linear alternating terpolymer of carbon monoxide, ethene, and propene was produced according to the procedures of EP-A-257663. The polyketone polymer had a melting point of 223°C and an LVN of 1.1 dl/g when measured in m-cresol at 60°C. The polyketone polymer also contained 0.5%wt. of a commercial antioxidant and 0.5%wt. of a commercial processing aid.

Blends were prepared of the polyketone terpolymer and a commercial polyvinylphenol having a number average molecular weight of 50,500 and a density of 1.16 g/cm$^3$. The blends were reinforced with electrical-grade borosilicate chopped glass fibres. The reinforced blends were compared with samples of the neat polyketone, and of the neat polyketone reinforced with glass fibres. The samples prepared are shown in Table 1.

The samples were compounded on a 30 mm co-rotating twin screw extruder, operating at 200 RPM with melt temperatures between 250 and 260°C. Subsequent to blending, specimens of the blends were molded into plaques on a 25 ton injection moulding machine. Moulded samples were stored over desiccant until tested. Mechanical testing was performed on "dry as moulded" samples.

TABLE 1

| Polyketone wt% (vol%) | Polyvinyl Phenol wt% (vol%) | Glass Fibres wt% (vol%) | Flexural[1] Modulus (MPa) | Tensile Strength (MPa) | Flexural Strength (MPa) |
|---|---|---|---|---|---|
| 100 (100) | 0 (0) | 0 (0) | 1,717 | 61.0 | 59.3 |
| 81 (90) | 0 (0) | 19 (10) | 3,944 | 63.1 | 97.2 |
| 80 (89) | 1 (1) | 19 (10) | 4,295 | 64.3 | 103.4 |
| 78 (87) | 3 (3) | 19 (10) | 4,013 | 73.4 | 113.1 |
| 72 (80) | 9 (10) | 19 (10) | 5,778 | 93.0 | 136.5 |

[1]Secant Modulus at 1% strain.

Flexural modulus, flexural strength, and tensile strength for the various samples are shown in Table 1. The mechanical properties of the neat polyketone polymer are improved through the addition of glass fibres, and are further improved by the addition of a small amount (1 wt%) of polyvinylphenol. Larger amounts of polyvinylphenol provide greater improvements in mechanical properties.

## Claims

1. Polyketone polymer composition comprising a linear alternating polymer of carbon monoxide and at least one ethylenically unsaturated compound a glass fibre reinforcement and a polyvinylphenol.

2. A composition as claimed in claim 1, characterised in that the linear alternating polymer is represented by the repeating formula

$$-[-CO-(-CH_2-CH_2-)-]_x-[-CO-(-G-)-]_y-$$

wherein G is a moiety of an ethylenically unsaturated hydrocarbon of at least 3 carbon atoms polymerized through the ethylenic unsaturation and the ratio of y:x is no more than 0.5.

3. A composition as claimed in claim 2, characterised in that the ratio of y:x is from 0.01 to 0.1, and G is a moiety of propylene.

4. A composition as claimed in any of claims 1, 2 or 3, characterised in that the polyvinylphenol is present at 0.1 wt% to 10 wt% and the glass fibres are present at 10 wt% to 45 wt%, based on total composition.

5. A composition as claimed in claim 4, characterised in that the polyvinylphenol is present at 0.5 wt% to 5 wt%, and the glass fibres are present at 25 wt% to about 40 wt%, based on total composition.

6. A composition as claimed in any of claims 1-5, characterised in that the glass fibres are not coated with a chemical coupling agent.